# EUROPEAN PATENT APPLICATION

(11) **EP 4 135 394 A1**
(43) Date of publication of application: **15.02.2023**
(21) Application number: 21785384.5
(22) Date of filing: 09.04.2021
(51) Int. Cl.: H04W 28/02

(54) **INFORMATION PROCESSING METHOD AND APPARATUS, AND COMMUNICATION DEVICE**

(30) Priority: 09.04.2020 CN 202010275729
(71) Applicant: Vivo Mobile Communication Co., Ltd., Dongguan, Guangdong 523863 (CN)
(72) Inventor: LIU, Jinhua, Dongguan, Guangdong 523863 (CN)
(74) Representative: Chas. Hude A/S
(86) International application number: PCT/CN2021/086160
(87) International publication number: WO 2021/204243

(57) **Abstract**

Embodiments of the present invention provide an information processing method and apparatus and a communication device and relate to the field of communication technologies. The information processing method includes: triggering a pre-emptive BSR; and canceling the pre-emptive BSR according to a first status in a process from triggering of the pre-emptive BSR to generation of the pre-emptive BSR, where the first status includes at least one of the following: a reception status of uplink data; and a triggering status of a target BSR, where the target BSR is at least one of a regular BSR and a periodic BSR.

## Description

### CROSS-REFERENCE TO RELATED APPLICATIONS

This application claims priority to Chinese Patent Application No. 202010275729.5, filed in China on April 09, 2020, which is incorporated herein by reference in its entirety.

### TECHNICAL FIELD

The present invention relates to the field of communication technologies, and in particular, to an information processing method and apparatus and a communication device.

### BACKGROUND

A pre-emptive buffer status report (Buffer Status Report, BSR) is a BSR report triggered based on a received BSR or data expected to be received. The pre-emptive BSR can trigger sending of a scheduling request (Scheduling Request, SR). However, after the pre-emptive BSR is triggered, an integrated access backhaul (integrated access backhaul, IAB) mobile termination (Mobile Termination, MT) needs to wait for an opportunity of sending an SR. After sending the SR, the IAB MT still needs to wait for scheduling by a parent IAB node. However, after the IAB MT has received an uplink grant from the parent IAB node and is ready to send the pre-emptive BSR, data expected to be received may have changed. In this case, a condition for triggering the pre-emptive BSR has disappeared or changed. If a pre-emptive BSR having no use for the scheduling by the parent IAB node is sent, interference will be caused to uplink scheduling of the parent IAB node.

### SUMMARY

Embodiments of the present invention provide an information processing method and apparatus and a communication device to solve a problem that sending of a pre-emptive BSR may interfere with uplink scheduling in the prior art.

To solve the foregoing technical problem, the present invention is implemented as follows:

According to a first aspect, an embodiment of the present invention provides an information processing method, applied to a relay device and including:
triggering a pre-emptive BSR; and
canceling the pre-emptive BSR according to a first status in a process from triggering of the pre-emptive BSR to generation of the pre-emptive BSR, where
the first status includes at least one of the following:
   a reception status of uplink data; and
   a triggering status of a target BSR, where the target BSR is at least one of a regular BSR and a periodic BSR.

According to a second aspect, an embodiment of the present invention provides an information processing apparatus, applied to a relay device and including:
a triggering module, configured to trigger a pre-emptive BSR; and
a processing module, configured to cancel the pre-emptive BSR according to a first status in a process from triggering of the pre-emptive BSR to generation of the pre-emptive BSR, where
the first status includes at least one of the following:
   a reception status of uplink data; and
   a triggering status of a target BSR, where the target BSR is at least one of a regular BSR and a periodic BSR.

According to a third aspect, an embodiment of the present invention provides a communication device, including a memory, a processor, and a computer program stored in the memory and capable of running on the processor, where when the computer program is executed by the processor, the steps of the foregoing information processing method may be implemented.

According to a fourth aspect, an embodiment of the present invention provides a computer-readable storage medium, where the computer-readable storage medium stores a computer program, and when the computer program is executed by a processor, the steps of the foregoing information processing method may be implemented.

In the embodiments of the present invention, after a pre-emptive BSR is triggered, the pre-emptive BSR can be canceled according to a status in a process from triggering of the pre-emptive BSR to generation of the pre-emptive BSR, for example, a reception status of uplink data and/or a triggering status of a target BSR. This can avoid sending of an invalid pre-emptive BSR, so as to save resources and prevent the invalid pre-emptive BSR from interfering with uplink scheduling.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic structural diagram of an IAB system according to an embodiment of the present invention;
FIG. 2 is a schematic diagram of a centralized unit-distributed unit (Centralized Unit-Distributed Unit, CU-DU) structure of an IAB system according to an embodiment of the present invention;
FIG. 3 is a flowchart of an information processing method according to an embodiment of the present invention;
FIG. 4 is a schematic diagram of a pre-emptive BSR cancel procedure according to an embodiment of the present invention;
FIG. 5 is a schematic diagram of a pre-emptive BSR cancel procedure according to an embodiment of the present invention;
FIG. 6 is a schematic diagram of a pre-emptive BSR cancel procedure according to an embodiment of the present invention;
FIG. 7 is a schematic diagram of a pre-emptive BSR cancel procedure according to an embodiment of the present invention;
FIG. 8 is a schematic structural diagram of an information processing apparatus according to an embodiment of the present invention; and
FIG. 9 is a schematic structural diagram of a communication device according to an embodiment of the present invention.

### DESCRIPTION OF EMBODIMENTS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

For ease of understanding of the embodiments of the present invention, the following is first described.

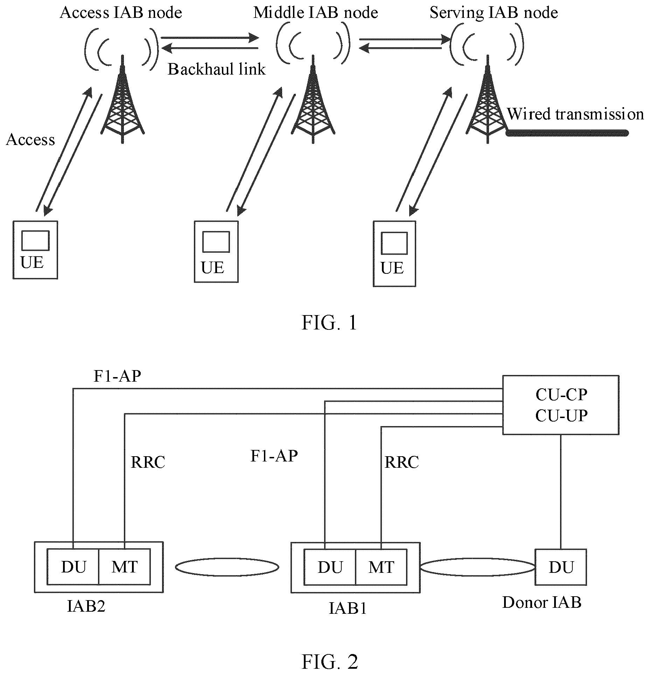

Referring to FIG. 1, FIG. 1 is a schematic structural diagram of an IAB system according to an embodiment of the present invention. In the IAB system, one IAB node includes a distributed unit (Distributed Unit, DU) function part and a mobile termination (Mobile Termination, MT) function part. Depending on an MT, one access point (that is, the IAB node node) can find an upstream access point (that is, a parent IAB node, parent IAB node) and establish a wireless connection with a DU of the upstream access point, and the wireless connection is referred to as a backhaul link (backhaul link). After the IAB node establishes a complete backhaul link, the IAB node enables its DU function, and the DU function provides a cell service, that is, the DU function can provide an access service for user equipment (User Equipment, UE). An integrated access backhaul loop includes one service donor IAB node (or referred to as IAB donor), and the donor IAB node has a directly connected wired transmission network.

A centralized unit-distributed unit (Centralized Unit-Distributed Unit, CU-DU) structure of an IAB system may be as shown in FIG. 2. In an integrated access backhaul loop, DUs of all IAB nodes are connected to one CU node, and the CU node configures the DUs through the F1-AP protocol. The CU configures the MT through the radio resource control (Radio Resource Control, RRC) protocol. The donor IAB node has no MT function part.

The IAB system is introduced for a case that no wired transmission network is deployed when access points are densely deployed, that is, in absence of a wired transmission network, access points can depend on wireless backhaul.

In this embodiment of the present invention, BSRs may at least be classified into: (1) a regular BSR (Regular BSR): the regular BSR may be triggered in any one of the following cases: an LCH having a higher priority than a logical channel (Logical Channel, LCH) having data being sent changes from having no data to be sent to having data to be sent; when none of LCHs have data being sent, one LCH changes to have data to be sent; and when a retxBSR-timer (retxBSR-Timer) expires, at least one LCH has data to be sent; and (2) a periodic BSR (Periodic BSR): the periodic BSR may be triggered when a periodicBSR-timer (periodicBSR-Timer) expires.

One LCH belongs to one logical channel group (LCH Group, LCG), a BS (buffer size, buffer size) of the BSR is reported by LCGs, and a maximum of eight LCGs can be configured. The regular BSR can trigger sending of an SR. If no grant (grant) is obtained after previous sending of an SR, retransmission of the SR may be triggered.

In this embodiment of the present invention, a pre-emptive BSR may be triggered based on a received BSR or data expected to be received. It can be understood that the received BSR may indicate that there is data expected to be received.

To reduce uplink data transmission delay, an IAB node may trigger the pre-emptive BSR after receiving a BSR (or SR) of UE or a downstream IAB node; or, the IAB node may trigger the pre-emptive BSR when having data expected to be received. The data expected to be received may be determined based on an uplink grant sent to the downstream IAB node or served UE. After the pre-emptive BSR is triggered, the IAB node may trigger sending of an SR to request an uplink transmission resource. If the uplink transmission resource is obtained, the IAB node may generate a pre-emptive BSR, send the pre-emptive BSR to a parent IAB node, and then cancel the pre-emptive BSR. The pre-emptive BSR can be transmitted only in a long BSR format (format) and occupy 3 to 11 bytes based on an LCG for the data expected to be received.

A time interval from triggering to sending of the pre-emptive BSR mainly depends on a period of an SR resource, scheduling of the parent IAB node, physical-layer transmission parameter configuration, and the like. A time interval from triggering of the pre-emptive BSR to generation of a media access control (Media Access Control, MAC) protocol data unit (Protocol Data Unit, PDU) containing the pre-emptive BSR may range from a few milliseconds to tens of milliseconds or even longer.

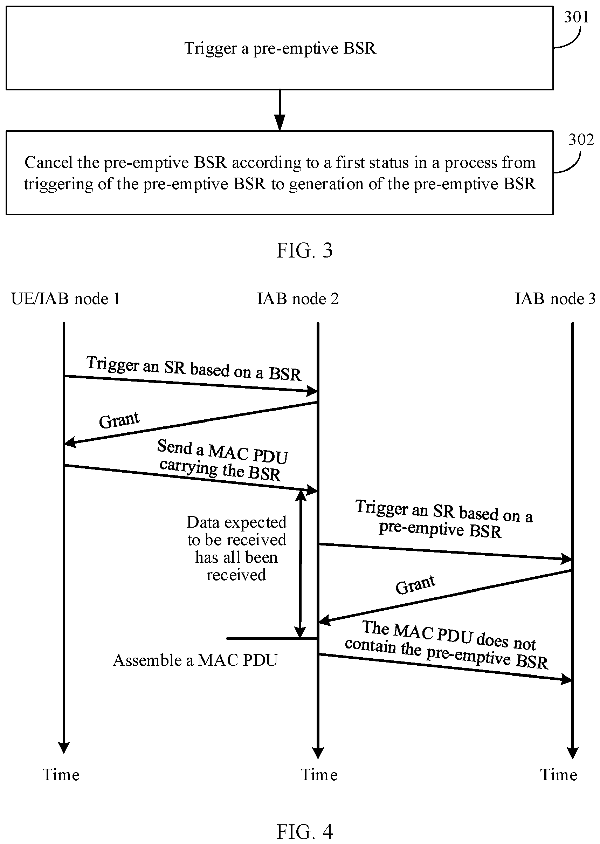

Referring to FIG. 3, FIG. 3 is a flowchart of an information processing method according to an embodiment of the present invention. The method is applied to a relay (relay) device (the relay device is, for example, an IAB node device or a relay device in another scenario). As shown in FIG. 3, the method includes the following steps:

Step 301. Trigger a pre-emptive BSR.

In this embodiment, the pre-emptive BSR (pre-emptive BSR) may be triggered based on a received BSR or data expected to be received.

Step 302. Cancel the pre-emptive BSR according to a first status in a process from triggering of the pre-emptive BSR to generation of the pre-emptive BSR.

Optionally, the first status may include at least one of the following:
a reception status of uplink data, where the reception status of the uplink data may be a reception status of the data expected to be received when the pre-emptive BSR is triggered; and
a triggering status of a target BSR, where the target BSR is at least one of a regular BSR and a periodic BSR.

In other words, in this embodiment, after triggering of the pre-emptive BSR based on the received BSR or the data expected to be received, the relay device (for example, an IAB MT) receives an uplink grant (or assembles a MAC PDU) and may determine, according to the reception status of the uplink data and/or the triggering status of the target BSR (regular BSR and/or periodic BSR), whether to cancel the pre-emptive BSR. The canceling the pre-emptive BSR may be understood as canceling sending of the pre-emptive BSR or canceling the triggered pre-emptive BSR.

In the information processing method according to this embodiment of the present invention, after the pre-emptive BSR is triggered, the pre-emptive BSR can be canceled according to a status, such as the reception status of the uplink data and/or the triggering status of the target BSR, in the process from triggering of the pre-emptive BSR to generation of the pre-emptive BSR. This can avoid sending of an invalid pre-emptive BSR, so as to save resources and prevent the invalid pre-emptive BSR from interfering with uplink scheduling.

In this embodiment of the present invention, after the pre-emptive BSR has been triggered, a manner of canceling the pre-emptive BSR may include any one of the following manners.

(1) Canceling the pre-emptive BSR in a case that the data expected to be received has been received in the process from triggering of the pre-emptive BSR to generation of the pre-emptive BSR.

The manner of canceling the pre-emptive BSR in (1) is specifically canceling the pre-emptive BSR after the data expected to be received has been all received. For example, if in a process in which the IAB MT assembles a MAC PDU for carrying the pre-emptive BSR, the data expected to be received becomes 0, that is, the data expected to be received has been all received, the triggered pre-emptive BSR may be canceled. If the IAB MT receives only part of the data expected to be received, the triggered pre-emptive BSR is not canceled.

According to the manner in (1), when generating the pre-emptive BSR and adding the pre-emptive BSR into the MAC PDU, the IAB MT may determine, according to the reception status of the uplink data in a period from triggering of the pre-emptive BSR to generation of the pre-emptive BSR, whether data corresponding to a BSR from a downstream node or UE or data expected to be received determined based on a historical uplink grant has been all received. If the data has been all received, that is, the data expected to be received is 0, sending of the pre-emptive BSR may be canceled.

For example, as shown in FIG. 4, UE or an IAB node 1 triggers sending of an SR to an IAB node 2 based on a BSR; after sending a grant to the UE or the IAB node 1, the IAB node 2 receives a MAC PDU carrying the BSR from the UE or the IAB node 1 and triggers a pre-emptive BSR; and the IAB node 2 triggers sending of an SR to an IAB node 3 based on the pre-emptive BSR and receives a grant from the IAB node 3.

Then, if in a process from triggering of the pre-emptive BSR to generation of the pre-emptive BSR (assembly of a MAC PDU), all data expected to be received has been received, that is, the data expected to be received has been all received, the IAB node 2 may cancel sending of the pre-emptive BSR, that is, the assembled MAC PDU to be sent to the IAB node 3 does not contain the pre-emptive BSR, or no MAC PDU containing the pre-emptive BSR is sent to the IAB node 3. This can prevent the IAB node 2 from sending an invalid pre-emptive BSR, so as to save resources and prevent the invalid pre-emptive BSR from interfering with scheduling of a parent IAB node (IAB node 3).

(2) Canceling the pre-emptive BSR in a case that data corresponding to a highest-priority LCG in first data has been received in the process from triggering of the pre-emptive BSR to generation of the pre-emptive BSR, where the first data is data expected to be received.

The manner of canceling the pre-emptive BSR in (2) is specifically canceling the pre-emptive BSR after all data expected to be received corresponding to a high-priority LCG has been received. For example, if in a process in which the IAB MT assembles a MAC PDU for carrying the pre-emptive BSR, the data expected to be received corresponding to the high-priority LCG has been all received, the triggered pre-emptive BSR may be canceled. If the IAB MT receives part of the to-be-received data corresponding to the high-priority LCG, the triggered pre-emptive BSR is not canceled.

According to the manner in (2), in a period from triggering of the pre-emptive BSR to generation of the pre-emptive BSR, if the data corresponding to the high-priority LCG in the data expected to be received has been all received, the IAB MT may cancel sending of the pre-emptive BSR.

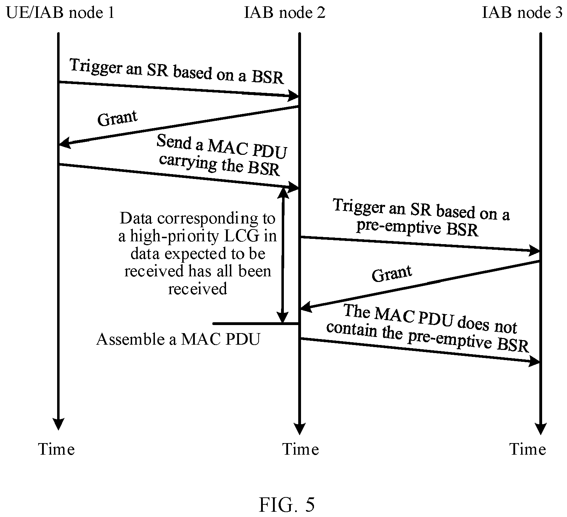

For example, as shown in FIG. 5, UE or an IAB node 1 triggers sending of an SR to an IAB node 2 based on a BSR; after sending a grant to the UE or the IAB node 1, the IAB node 2 receives a MAC PDU carrying the BSR from the UE or the IAB node 1 and triggers a pre-emptive BSR; and the IAB node 2 triggers sending of an SR to an IAB node 3 based on the pre-emptive BSR and receives a grant from the IAB node 3.

Then, if in a process from triggering of the pre-emptive BSR to generation of the pre-emptive BSR (assembly of a MAC PDU), all to-be-received data corresponding to a high-priority LCG in data expected to be received has been received, the IAB node 2 may cancel sending of the pre-emptive BSR, that is, the assembled MAC PDU to be sent to the IAB node 3 does not include the pre-emptive BSR, or no MAC PDU containing the pre-emptive BSR is sent to the IAB node 3. This can prevent the IAB node 2 from sending an invalid pre-emptive BSR, so as to save resources and prevent the invalid pre-emptive BSR from interfering with scheduling of a parent IAB node (IAB node 3).

(3) Canceling the pre-emptive BSR in a case that the target BSR has been triggered in the process from triggering of the pre-emptive BSR to generation of the pre-emptive BSR and that a first priority is higher than or equal to a second priority, where the first priority is a priority of a highest-priority LCG corresponding to the target BSR, and the second priority is a priority of a highest-priority LCG corresponding to data expected to be received.

The manner of canceling the pre-emptive BSR in (3) is specifically canceling the pre-emptive BSR according to a triggering status of a regular BSR and/or a periodic BSR. For example, if before assembly of a MAC PDU for carrying the pre-emptive BSR, the IAB MT has triggered a regular BSR and/or a periodic BSR, and a priority of a highest-priority LCG reported by the regular BSR and/or the periodic BSR is higher than or equal to a priority of a highest-priority LCG reported by the pre-emptive BSR, the triggered pre-emptive BSR may be canceled.

According to the manner in (3), if the regular BSR and/or the periodic BSR has been triggered when the pre-emptive BSR is being generated, and a priority of a highest-priority LCG, indicated by the regular BSR and/or the periodic BSR, in LCGs having data is higher than or equal to a priority of a highest-priority LCG in LCGs having data expected to be received, the pre-emptive BSR may be canceled.

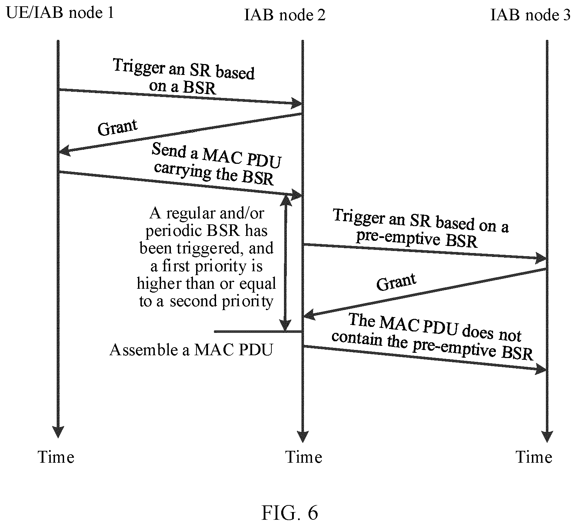

For example, as shown in FIG. 6, UE or an IAB node 1 triggers sending of an SR to an IAB node 2 based on a BSR; after sending a grant to the UE or the IAB node 1, the IAB node 2 receives a MAC PDU carrying the BSR from the UE or the IAB node 1 and triggers a pre-emptive BSR; and the IAB node 2 triggers sending of an SR to an IAB node 3 based on the pre-emptive BSR and receives a grant from the IAB node 3.

Then, if in a process from triggering of the pre-emptive BSR to generation of the pre-emptive BSR (assembly of a MAC PDU), a regular BSR and/or a periodic BSR has been triggered and a first priority is higher than or equal to a second priority, the IAB node 2 may cancel sending of the pre-emptive BSR, that is, the assembled MAC PDU to be sent to the IAB node 3 does not contain the pre-emptive BSR, or no MAC PDU containing the pre-emptive BSR is sent to the IAB node 3, where the first priority is a priority of a highest-priority LCG, indicated by the regular BSR and/or the periodic BSR, in LCGs having data, and the second priority is a priority of a highest-priority LCG in LCGs having data expected to be received. This can prevent the IAB node 2 from sending an invalid pre-emptive BSR, so as to save resources and prevent the invalid pre-emptive BSR from interfering with scheduling of a parent IAB node (IAB node 3).

(4) Canceling the pre-emptive BSR in a case that the target BSR has been triggered in the process from triggering of the pre-emptive BSR to generation of the pre-emptive BSR and that a MAC PDU for carrying the pre-emptive BSR is unable to carry both the pre-emptive BSR and the target BSR.

The manner of canceling the pre-emptive BSR in (4) is specifically canceling the pre-emptive BSR based on available capacity of the MAC PDU. For example, if before assembly of a MAC PDU for carrying the pre-emptive BSR, the IAB MT has triggered a regular BSR and/or a periodic BSR, and capacity of the MAC PDU is insufficient to carry both the regular BSR and/or the periodic BSR and the pre-emptive BSR, the triggered pre-emptive BSR may be canceled.

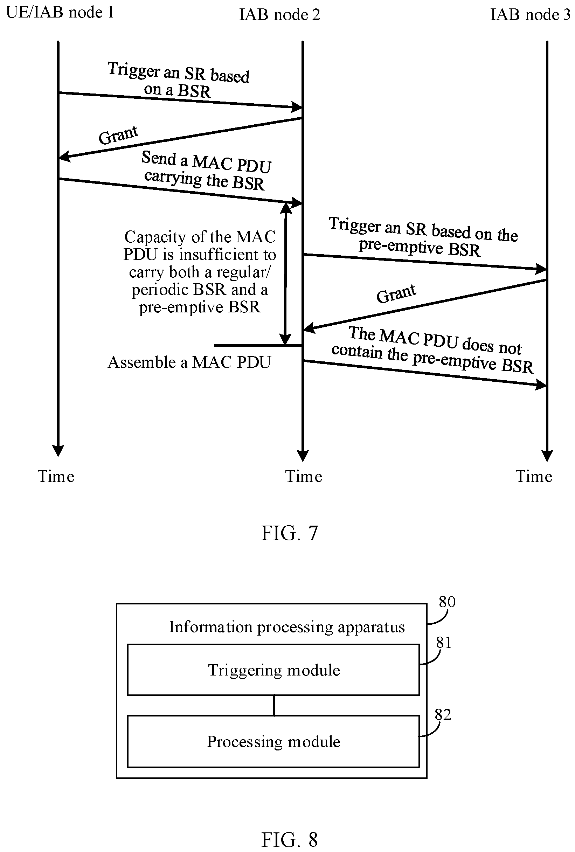

For example, as shown in FIG. 7, UE or an IAB node 1 triggers sending of an SR to an IAB node 2 based on a BSR; after sending a grant to the UE or the IAB node 1, the IAB node 2 receives a MAC PDU carrying the BSR from the UE or the IAB node 1 and triggers a pre-emptive BSR; and the IAB node 2 triggers sending of an SR to an IAB node 3 based on the pre-emptive BSR and receives a grant from the IAB node 3.

Then, if in a process from triggering of the pre-emptive BSR to assembly of a MAC PDU, a regular BSR and/or a periodic BSR has been triggered, and the MAC PDU is unable to carry both the regular BSR and/or the periodic BSR and the pre-emptive BSR, the IAB node 2 may cancel sending of the pre-emptive BSR, that is, the assembled MAC PDU to be sent to the IAB node 3 does not contain the pre-emptive BSR, or no MAC PDU containing the pre-emptive BSR is sent to the IAB node 3. This can prevent the IAB node 2 from sending an invalid pre-emptive BSR, so as to save resources and prevent the invalid pre-emptive BSR from interfering with scheduling of a parent IAB node (IAB node 3).

Referring to FIG. 8, FIG. 8 is a schematic structural diagram of an information processing apparatus according to an embodiment of the present invention. As shown in FIG. 8, the information processing apparatus 80 includes:
a triggering module 81, configured to trigger a pre-emptive BSR; and
a processing module 82, configured to cancel the pre-emptive BSR according to a first status in a process from triggering of the pre-emptive BSR to generation of the pre-emptive BSR, where
the first status includes at least one of the following:
   a reception status of uplink data; and
   a triggering status of a target BSR, where the target BSR is at least one of a regular BSR and a periodic BSR.

Optionally, the processing module 82 is specifically configured to:
cancel the pre-emptive BSR in a case that data expected to be received has been received in the process from triggering of the pre-emptive BSR to generation of the pre-emptive BSR.

Optionally, the processing module 82 is specifically configured to:
cancel the pre-emptive BSR in a case that data corresponding to a highest-priority LCG in first data has been received in the process from triggering of the pre-emptive BSR to generation of the pre-emptive BSR, where
the first data is data expected to be received.

Optionally, the processing module 82 is specifically configured to:
cancel the pre-emptive BSR in a case that the target BSR has been triggered in the process from triggering of the pre-emptive BSR to generation of the pre-emptive BSR and that a first priority is higher than or equal to a second priority, where
the first priority is a priority of a highest-priority LCG corresponding to the target BSR, and the second priority is a priority of a highest-priority LCG corresponding to data expected to be received.

Optionally, the processing module 82 is specifically configured to:
cancel the pre-emptive BSR in a case that the target BSR has been triggered in the process from triggering of the pre-emptive BSR to generation of the pre-emptive BSR and that a MAC PDU for carrying the pre-emptive BSR is unable to carry both the pre-emptive BSR and the target BSR.

The terminal 80 in this embodiment of the present invention is capable of implementing the processes implemented in the method embodiment shown in FIG. 3, with the same beneficial effects achieved. To avoid repetition, details are not described herein again.

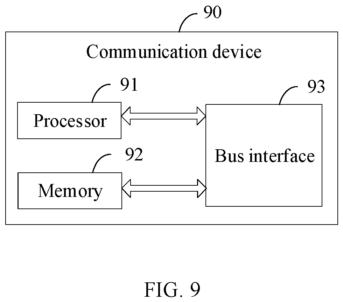

Referring to FIG. 9, FIG. 9 is a schematic structural diagram of a communication device according to an embodiment of the present invention. As shown in FIG. 9, a communication device 90 includes: a processor 91, a memory 92, and a computer program stored in the memory 92 and capable of running on the processor 91. The components of the communication device 90 are coupled together by using the bus interface 93, and when the computer program is executed by the processor 91, the processes implemented in the method embodiment shown in FIG. 3 may be implemented, with the same technical effects achieved. To avoid repetition, details are not described herein again.

An embodiment of the present invention further provides a computer-readable storage medium, where the computer-readable storage medium stores a computer program. When the computer program is executed by a processor, the processes in the method embodiment shown in FIG. 3 may be implemented, with the same technical effects achieved. To avoid repetition, details are not described herein again. The computer-readable storage medium is a read-only memory (Read-Only Memory, ROM), for example, a random access memory (Random Access Memory, RAM), a magnetic disk, or an optical disc.

It can be understood that the embodiments described in this disclosure may be implemented by hardware, software, firmware, middleware, microcode, or a combination thereof. For hardware implementation, a module, a unit, a sub-module, a sub-unit, or the like may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that, in this specification, the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc) and includes several instructions for instructing a terminal (which may be a mobile phone, a computer, a server, an air conditioner, a network device, or the like) to perform the method described in the embodiments of the present invention.

The embodiments of the present invention are described above with reference to the accompanying drawings, but the present invention is not limited to the foregoing embodiments. The foregoing embodiments are only illustrative rather than restrictive. Inspired by the present invention, a person of ordinary skill in the art can still derive many variations without departing from the essence of the present invention and the protection scope of the claims. All these variations shall fall within the protection of the present invention.

## Claims

1. An information processing method, applied to a relay device and comprising:
triggering a pre-emptive buffer status report BSR; and
canceling the pre-emptive BSR according to a first status in a process from triggering of the pre-emptive BSR to generation of the pre-emptive BSR, wherein
the first status comprises at least one of the following:
a reception status of uplink data; and
a triggering status of a target BSR, wherein the target BSR is at least one of a regular BSR and a periodic BSR.

2. The method according to claim 1, wherein the canceling the pre-emptive BSR according to a first status in a process from triggering of the pre-emptive BSR to generation of the pre-emptive BSR comprises:
canceling the pre-emptive BSR in a case that data expected to be received has been received in the process from triggering of the pre-emptive BSR to generation of the pre-emptive BSR.

3. The method according to claim 1, wherein the canceling the pre-emptive BSR according to a first status in a process from triggering of the pre-emptive BSR to generation of the pre-emptive BSR comprises:
canceling the pre-emptive BSR in a case that data corresponding to a highest-priority logical channel group LCG in first data has been received in the process from triggering of the pre-emptive BSR to generation of the pre-emptive BSR, wherein the first data is data expected to be received.

4. The method according to claim 1, wherein the canceling the pre-emptive BSR according to a first status in a process from triggering of the pre-emptive BSR to generation of the pre-emptive BSR comprises:
canceling the pre-emptive BSR in a case that the target BSR has been triggered in the process from triggering of the pre-emptive BSR to generation of the pre-emptive BSR and that a first priority is higher than or equal to a second priority, wherein
the first priority is a priority of a highest-priority LCG corresponding to the target BSR, and the second priority is a priority of a highest-priority LCG corresponding to data expected to be received.

5. The method according to claim 1, wherein the canceling the pre-emptive BSR according to a first status in a process from triggering of the pre-emptive BSR to generation of the pre-emptive BSR comprises:
canceling the pre-emptive BSR in a case that the target BSR has been triggered in the process from triggering of the pre-emptive BSR to generation of the pre-emptive BSR and that a media access control protocol data unit MAC PDU for carrying the pre-emptive BSR is unable to carry both the pre-emptive BSR and the target BSR.

6. An information processing apparatus, applied to a relay device and comprising:
a triggering module, configured to trigger a pre-emptive BSR; and
a processing module, configured to cancel the pre-emptive BSR according to a first status in a process from triggering of the pre-emptive BSR to generation of the pre-emptive BSR, wherein
the first status comprises at least one of the following:
a reception status of uplink data; and
a triggering status of a target BSR, wherein the target BSR is at least one of a regular BSR and a periodic BSR.

7. The apparatus according to claim 6, wherein the processing module is specifically configured to:
cancel the pre-emptive BSR in a case that data expected to be received has been received in the process from triggering of the pre-emptive BSR to generation of the pre-emptive BSR.

8. The apparatus according to claim 6, wherein the processing module is specifically configured to:
cancel the pre-emptive BSR in a case that data corresponding to a highest-priority LCG in first data has been received in the process from triggering of the pre-emptive BSR to generation of the pre-emptive BSR, wherein
the first data is data expected to be received.

9. The apparatus according to claim 6, wherein the processing module is specifically configured to:
cancel the pre-emptive BSR in a case that the target BSR has been triggered in the process from triggering of the pre-emptive BSR to generation of the pre-emptive BSR and that a first priority is higher than or equal to a second priority, wherein
the first priority is a priority of a highest-priority LCG corresponding to the target BSR, and the second priority is a priority of a highest-priority LCG corresponding to data expected to be received.

10. The apparatus according to claim 6, wherein the processing module is specifically configured to:
cancel the pre-emptive BSR in a case that the target BSR has been triggered in the process from triggering of the pre-emptive BSR to generation of the pre-emptive BSR and that a MAC PDU for carrying the pre-emptive BSR is unable to carry both the pre-emptive BSR and the target BSR.

11. A communication device, comprising a memory, a processor, and a computer program stored in the memory and capable of running on the processor, wherein when the computer program is executed by the processor, the steps of the information processing method according to any one of claims 1 to 5 are implemented.

12. A computer-readable storage medium, wherein the computer-readable storage medium stores a computer program, and when the computer program is executed by a processor, the steps of the information processing method according to any one of claims 1 to 5 are implemented.
